# EUROPEAN PATENT APPLICATION

(11) **EP 4 686 889 A1**
(43) Date of publication of application: **04.02.2026**
(21) Application number: 25193425.3
(22) Date of filing: 01.08.2025
(51) Int. Cl.: F24F 6/00, C02F 1/42

(54) **HUMIDIFIER**

(30) Priority: 02.08.2024 KR 20240103255
(71) Applicant: LG Electronics Inc., Yeongdeungpo-gu Seoul 07336 (KR)
(72) Inventor: KU, Myungjin, Seoul (KR); PARK, Keunman, Seoul (KR); LEE, Kunyoung, Seoul (KR); LEE, Donggun, Seoul (KR); JEON, Jihye, Seoul (KR)
(74) Representative: Vossius & Partner Patentanwälte Rechtsanwälte mbB

(57) **Abstract**

The present invention relates to a humidifier. The humidifier includes: a water tank holding water; a humidification module that generates humidified air from water supplied from the water tank; and a water softener placed within the water tank. The water softener includes: a water softener casing internally forming a space and having a plurality of holes formed on top and bottom sides thereof; ion-exchange resins placed within the water softener casing; and an inner filter positioned within the water softener casing, that absorbs and disperses water admitted into the water softener casing.

## Description

The present invention relates to a humidifier, and more particularly, to a humidifier including a water softener.

A humidifier is a device that evaporates water to emit humidified air with a high moisture content.

The humidifier may generate humidified air by evaporating water using natural vaporization, heating vaporization, and ultrasonic vibration.

Each evaporation method has its own merits and demerits. Natural vaporization has a drawback in that a user is required to frequently clean a humidifying medium after use.

In the case of vaporization by ultrasonic vibration which involves atomizing supplied water by ultrasonic vibration, the movement of humidified air into an indoor space can be less active, the use of unsterilized air for humidification can lead to unpleasant humidified air flowing into an indoor space, and an ultrasonic vibrator is sensitive to high-temperature heat.

In the case of heating vaporization, direct discharge of hot humidified air can lead to safety incidents.

Korean Patent Registration No. KR 10-0158806 discloses a humidifier that heats water supplied from a water tank and humidifies air by ultrasonic vibration.

Incidentally, the prior art document discloses a structure in which a water heating space and a humidification space are connected together. This can lead to the problem of incomplete sterilization of water if a water heating temperature is kept below a set temperature in consideration of an ultrasonic vibrator.

Moreover, neither heating nor ultrasonic vibration alone can remove ions contained in water, which may generate humidified air carrying those ions into the indoor space.

Therefore, the present invention has been made in view of the above problems, and it is an object of the present invention to solve the above-described problems and other problems.

When water is continuously supplied to a certain area of the water softener, the water may move only to ion-exchange resins placed in that certain area of the water softener. This may lead to problems such as a reduction in the size of the ion-exchange resins and a shortening of the duration of use of the water softener.

Another object of the present invention is to provide a humidifier in which water supplied to the water softener is moved uniformly throughout the ion-exchange resins placed in the water softener.

The ion-exchange resins, when present in the water softener, can remove ions from flowing water. However, the ion-exchange resins may build up in other components if they leak out of the water softener. Also, microbes or the like may grow actively in areas where the ion-exchange resins leak out.

Another object of the present invention is to prevent the ion-exchange resins placed in the water softener from leaking out of the water softener.

Even with the water softener placed within the water tank, water may move through even a very small space. Thus, if water is supplied to the humidification module without having passed through the water softener, the humidification module may generate ion-containing humidified air.

Still another object of the present invention is to provide a humidifier that generates air from water only when the water has passed through the water softener.

A further object of the present invention is to provide a humidifier that seals the gap between the water tank and the humidification module.

The present invention is specified by the independent claim. Preferred embodiments are defined by the dependent claims. An embodiment of the present invention provides a humidifier including: a water tank for storing water; a humidification module configured to generate humidified air using water supplied from the water tank; and a water softener disposed inside the water tank.

The water softener may include a water softener casing forming a space and having a plurality of holes formed on top surface and bottom surface thereof; preferably ion-exchange resin disposed inside the water softener casing; and preferably an inner filter disposed inside the water softener casing and configured to absorb and disperse water introduced into the water softener casing.

The inner filter may be disposed below the top surface of the water softener casing.

The inner filter may be formed of a material of a certain thickness that absorbs water.

A mesh filter may be disposed on each of the top surface and bottom surface of the water softener casing.

The thickness of the inner filter may be greater than the thickness of the mesh filter.

The inner filter may include an upper inner filter disposed at an upper part of the water softener casing; and a lower inner filter disposed at a lower part of the water softener casing.

The ion-exchange resins may be placed between the upper inner filter and the lower inner filter.

The water softener casing may include a water softener housing forming a space for accommodating the ion-exchange resin and preferably having a plurality of holes in a bottom surface thereof; and preferably a housing cover covering the upper portion of the water softener housing and having a plurality of holes. A mesh filter may be mounted on the bottom surface of the water softener housing and on the housing cover.

The inner filter may include a lower inner filter disposed to contact the bottom surface of the water softener housing; and preferably an upper inner filter disposed below and in contact with the housing cover.

The mesh filter may be insert-molded into the bottom surface of the water softener housing and the housing cover.

The humidifier may further include a connector coupled to the water softener and configured to send water passed through the water softener to the humidification module. The connector may be disposed to penetrate the water tank.

The humidifier may further include an upper sealer that seals between the connector and the water softener.

The connector may include a connector plate disposed below the water softener and inside the water tank; and preferably a connector pipe extending downward from the connector plate and penetrating the water tank. The upper sealer may be disposed on the connector plate.

A connecting space may be formed between the water softener and the connector, the space connecting the water softener and an internal passage of the connector pipe. The upper sealer may seal the connecting space.

The humidifier may further include a lower sealer that seals between the connector and the water tank. The lower sealer may be disposed below the connector plate.

Another embodiment of the present invention may provide a humidifier including: a water tank for storing water; preferably a humidification module configured to generate humidified air using water supplied from the water tank; preferably a water softener disposed inside the water tank and configured to reduce water hardness through ion-exchange resin therein; and preferably a connector coupled to a bottom of the water softener and configured to supply water to the humidification module.

Mesh filters may be disposed on each of top surface and lower surface of the water softener, each having a plurality of holes. An upper sealer may be disposed between the connector and the water softener to allow water released from the water softener to flow to the connector.

An inner filter may be disposed inside the water softener casing so as to contact the mesh filter, and is formed of a material that absorbs water.

The plurality of holes formed in the bottom surface of the water softener may be formed within an area where the upper sealer is disposed.

The connector may include a connector plate disposed below the water softener and inside the water tank; and preferably a connector pipe extending downward from the connector plate and penetrating the water tank.

A connecting space may be formed between the water softener and the connector to connect the water softener and an internal passage of the connector pipe. The upper sealer may seal the connecting space to allow water passed through the water softener to flow into the internal passage.

A lower sealer may be disposed below the connector plate. An upper peripheral space may be formed between the connector and the periphery of the water tank. A lower peripheral space may be formed between the connector and a bottom side of the water tank.

The lower sealer may seal between the upper peripheral space and the lower peripheral space.

Specific details of other embodiments are included in the detailed description and drawings.

A humidifier of the present invention has one or more of the following effects.

First, the water softener may be placed in the water tank to generate humidified air from water from which ions are removed. Thus, humidified air can be generated from water with low hardness.

Second, the water admitted into the water softener can be moved uniformly throughout the ion-exchange resins through an inner filter. This can lengthen the duration of use of the water softener.

Third, the ion-exchange resins stored in the water softener can be kept from leaking out. Thus, it is possible to solve the problems that occur when the ion-exchange resins leak out to the humidification module or other components.

Fourth, humidified air can be generated only from water that has passed through the water softener. Users can feel comfort while the humidifier is operating.

Fifth, leakage of water out of the water tank can be prevented. This can avoid malfunction of the humidifier or water collecting inside.

The effects of the present invention are not limited to the above-mentioned effects, and other effects that are not mentioned may be obviously understood by those skilled in the art from the claims.

### BRIEF DESCRIPTION OF THE DRAWINGS

FIG. 1 is a perspective view of a humidifier according to one embodiment of the present invention.
FIG. 2 is a plan view of FIG. 1.
FIG. 3 is a cross-sectional view taken along III-III' of FIG. 2.
FIG. 4 is an exploded perspective view of an inner shell with a water tank placed therein, a supply tube, and an upper cover according to an embodiment of the present invention.
FIG. 5 is an exploded perspective view of an inner reservoir and an outer reservoir according to an embodiment of the present invention.
FIG. 6 is an exploded perspective view of an inner reservoir, a water softener, and a connector according to an embodiment of the present invention.
FIG. 7 is an exploded perspective view of components of a water softener according to an embodiment of the present invention.
FIG. 8 is a cross-sectional view of a water softener according to an embodiment of the present invention.
FIG. 9 is an exploded perspective view of components of a connector according to an embodiment of the present invention.
FIG. 10 is a cross-sectional view of one side of FIG. 9.
FIG. 11 is a perspective view of a connector holder according to a first embodiment of the present invention.
FIG. 12 is a cross-sectional view for explaining connections between the connector holder of the first embodiment and its related components.
FIG. 13 is a perspective view of a connector holder according to a second embodiment of the present invention.
FIG. 14 is a cross-sectional view for explaining the connections between the connector holder of the second embodiment and its related components.
FIG. 15 is a cross-sectional view of one side of an inner reservoir with a water softener and a connector connected thereto according to an embodiment of the present invention.
FIG. 16 is a cross-sectional view of one side of a water tank, an inner shell, a supply tube, and an upper cover connected together according to an embodiment of the present invention.
FIG. 17 is an enlarged view of a portion of FIG. 16.

### DETAILED DESCRIPTION OF THE PREFERRED EMBODIMENTS

Advantages and features of the present invention and methods of achieving them will become apparent with reference to the embodiments described below in detail in conjunction with the accompanying drawings. However, the present invention is not limited to the embodiments disclosed below, but may be implemented in various different forms, and these embodiments are provided only to allow the disclosure of the present invention to be complete, and to completely inform those of ordinary skill in the art to which the present invention belongs, the scope of the invention, and the present invention is only defined by the scope of the claims. Like reference numerals refer to like elements throughout the specification.

Hereinafter, the present invention will be described with reference to the drawings for explaining a humidifier according to embodiments of the present invention.

A humidifier of the present invention may generate humidified air from water by ultrasonic vibration. A humidifier of the present invention may generate humidified air by heating water. A humidifier of the present invention may generate humidified air produced by ultrasonic vibration and humidified air produced by heating.

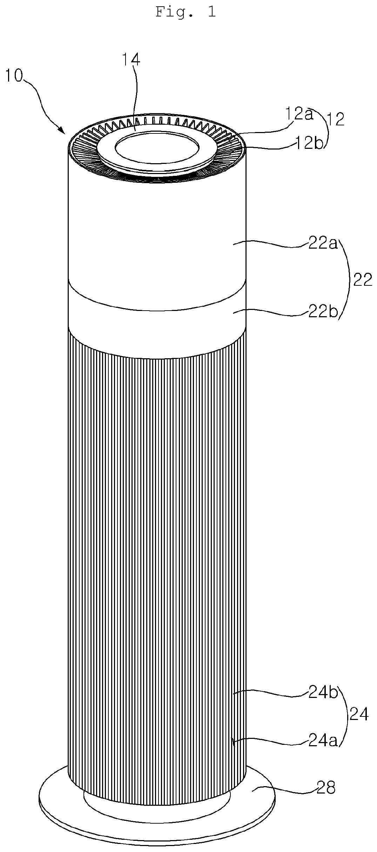

Referring to FIG. 1, an exterior of a humidifier of the present invention will be described.

The humidifier may include a casing 10 that forms the exterior, with an inlet 24a and an outlet 12a formed therein.

The casing 10 may have an overall cylindrical shape.

The casing 10 may include an intake grille 24 which forms the inlet 24a through which air is admitted, and a discharge grille 12 which forms the outlet 12a through which air is discharged. The inlet 24a may be formed on a circumferential surface of the casing 10 having a cylindrical shape. The outlet 12a may be formed on a top surface of the casing 10 having a cylindrical shape. The humidifier of the present invention may allow air to be admitted through the circumferential surface and be discharged through the top surface.

The intake grille 24 may include a plurality of ribs 24b that extend vertically. The plurality of grilles 24b may be spaced apart in a circumferential direction of the intake grille 24. A plurality of inlets 24a may be formed between the plurality of grilles 24b.

The casing 10 may include a water tank cover 14 positioned on top of the water tank 100.

The humidifier may include a discharge grille 12 forming the outlet 12a and a water tank cover 14 positioned on top of the water tank 100.

The discharge grille 12 may be configured to be separated upward from an outer shell 22 to be described later. The water tank cover 14 may be configured to be separated from the discharge grille 12 or from the water tank 100 to be described later.

The discharge grille 12 may include a plurality of ribs 12b that extend radially from the outer periphery of the water tank cover 14. The plurality of ribs 12b positioned at the discharge grille 12 may be spaced apart circumferentially from the outer periphery of the water tank cover 14.

The casing 10 may include an outer shell 22 for directing the air moving inside it to the outlet 12a.

The outer shell 22 may include an upper outer shell 22a positioned under the discharge grille 12 and a lower outer shell 22b positioned under the upper outer shell 22a. The lower outer shell 22b may be formed of a transparent material.

The humidifier may include a base 28 positioned under the casing 10, which causes the casing 10 to be spaced a certain distance apart from the ground. An upper end portion of the base 28 may be connected to a lower end portion of the casing 10.

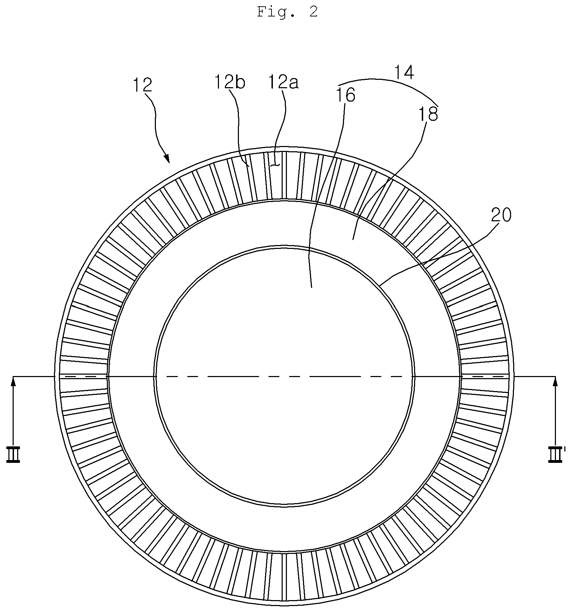

Hereinafter, a top portion of the humidifier will be described with reference to FIG. 2.

The water tank cover 14 may include a central cover 16 and a peripheral cover 18 positioned around the central cover 16. The central cover 16 may bulge upward toward the center. A water supply hole 20 may be formed between the peripheral cover 18 and the central cover 16 to allow water to move into the water tank 100.

A plurality of outlets 12a may be formed between the plurality of ribs 12b positioned at the discharge grille 12.

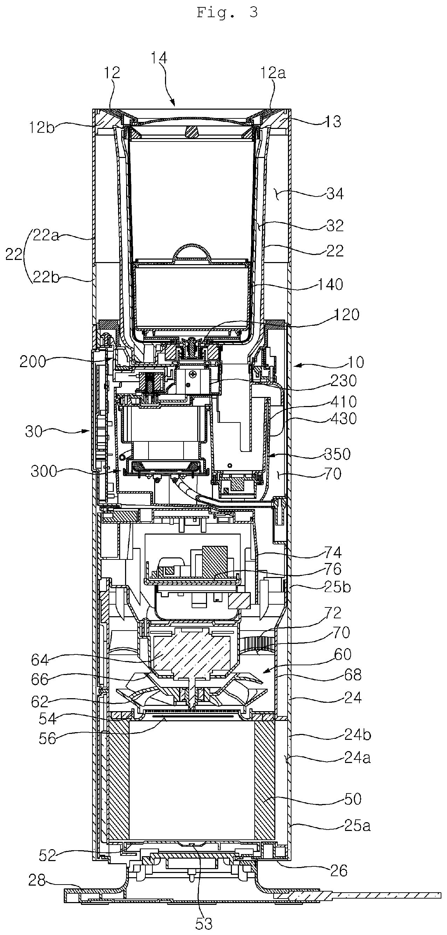

Hereinafter, an internal construction of the humidifier will be described with reference to FIG. 3.

The humidifier may include a filter unit positioned inside the casing 10, for filtering the air admitted into the inlets 24a. The humidifier may include a blower 60 positioned inside the casing 10, for moving the air inside the casing 10 from the inlets 24a to the outlets 12a. The humidifier may include a water tank 100 positioned inside the casing 10, for holding water. The humidifier may include a humidification module that generates humidified air from water supplied from the water tank 100.

The humidifier may include a base 28. The base 28 may cause the casing 10 to be spaced upward from the ground. The base 28 may be connected to a bottom wall 26 of the casing 10.

The casing 10 may include a bottom wall 26 which covers the bottom of the intake grille 24.

An upper end portion of the base 28 may be connected to the bottom wall 26. The bottom wall 26 may be positioned in such a way as to cover a bottom surface of the humidifier which is spaced upward from the ground by the base 28.

The intake grille 24 may cover the outsides of a filter 50 and a blower housing 68 to be described below. The intake grille 24 may have a plurality of inlets 24a that are vertically formed and circumferentially spaced apart. The inlets 24a may be formed around where the filter 50 is placed. The inlets 24a may be formed in a lower portion of the intake grille 24. The lower portion of the intake grille 24 may be formed with inlets 24a, and an upper portion of the intake grille 24 may be enclosed to protect the internal construction of the humidifier.

The outer shell 22 may be positioned over the intake grille 24.

The filter unit may allow the air admitted through the inlets 24a to be filtered through the filter 50. The filter unit may allow the filtered air to move upward.

The filter unit may include a filter 50 for filtering the air admitted through the inlets 24a and a filter mounting portion for fixing the filter 50 in place inside the casing 10.

The filter 50 may be cylindrical. Thus, the filter 50 may be able to filter air drawn in from longitudinal and lateral directions perpendicular to the vertical direction. The air admitted through the inlets 24a may move to an inside space of the filter 50. The air passed through the filter 50 may move to the blower 60 positioned over the filter 50.

The filter mounting portion may include a lower plate 52 positioned on a lower side of the filter 50, preferably an upper plate 54 positioned on an upper side of the filter 50, and preferably a supporter (not shown) connecting the lower plate 52 and the upper plate 54.

The lower plate 52 may be positioned on a lower side of the filter 50. The lower plate 52 may move up and down and detect whether the filter 50 is placed. A fan sterilizer 53 may be positioned in the center of the lower plate 52 to emit ultraviolet light upward.

The fan sterilizer 53 may sterilize a blower fan 62 to be described below or the inside of the filter 50.

An orifice 56 may be formed in the upper plate 54. The orifice 56 may be formed in the center of the upper plate 54. The orifice 56 may allow the air admitted to the inside of the filter 50 to move to the blower fan 62. An inner circumferential end of the upper plate 54 may be bent upward so as to guide the upward movement of air in the inside space of the filter 50 to the blower fan 62.

The supporter may connect the lower plate 52 and the upper plate 54. The supporter may be circumferentially spaced apart.

The blower 60 may include a blower fan 62 that forms an air flow within the casing 10 and a fan motor 64 that rotates the blower fan 62.

The blower fan 62 may have a fan intake opening on one side facing the orifice 56 and a fan discharge opening on the opposite side of the fan intake opening. The blower fan 62 may be a diagonal flow fan in which the fan discharge opening on the opposite side of the fan intake opening faces in a centrifugal direction. The blower fan 62 may include a hub connected to the fan motor 64, a shroud spaced apart from the hub by a certain distance and forming the fan intake opening, and a blade extending radially to connect the hub and the shroud.

The blower fan 62 may be activated to send air upward from below. The blower fan 62 may draw air toward the orifice 56 and discharge air to the blower housing 68 where a diffuser 72 is placed.

The fan motor 64 may be positioned over the blower fan 62.

The blower may include a motor cover 66 that covers the outside of the fan motor 64, and preferably a blower housing 68 spaced radially outward from the motor cover 66, that guides the upward movement of air blown by the blower fan 62.

A blower channel 70 along which the air blown by the blower fan 62 moves upward may be formed between the motor cover 66 and the blower housing 68. The blower channel 70 may extend as far as where a humidification module housing 410 and a channel housing 430 are formed.

The intake grille 24 may be positioned on the outside of the blower housing 68.

The blower 60 may include a diffuser 72 positioned between the motor cover 66 and the blower housing 68, that reduces rotational components of the air blown upward by the blower fan 62. A plurality of diffusers 72 may be circumferentially spaced apart.

A control box 74 forming a space within which a circuit board 76 is placed may be positioned over the motor cover 66. The control box 74 may be spaced apart inwardly from the blower housing 68. Thus, the blower channel 70 may be formed in the space between the control box 74 and the blower housing 68 as well.

A plurality of circuit boards 76 may be placed within the control box 74. The humidification module may include a first humidification reservoir 300 which heats water. The humidification module may include a second humidification reservoir 350 which generates humidified air from water. The humidification module may include a humidification module housing 410 which covers the peripheries of the first humidification reservoir 300 and the second humidification reservoir 350. The channel housing 430 may be positioned around the outer periphery of the humidification module housing 410. The blower channel 70 may be formed between the humidification module housing 410 and the channel housing 430.

The humidifier may include a water tank 100 forming a space in which water is held, preferably an inner shell 180 forming a space in which the water tank 100 is placed, and preferably a middle tray 200 positioned under the inner shell 180.

The water tank 100 may have an inner tank 102 placed inside an outer tank 160. The water tank 100 may include an inner tank 102 forming a space where water is held and having a bottom hole on a bottom surface and an outer tank 160 forming a space where the inner tank is accommodated.

The connector 120 connecting the inner tank 102 and the supply pipe 230 may be positioned to penetrate the outer tank 160.

The outer tank 160, while placed inside the inner shell 180, may be positioned over the middle tray 200. The middle tray 200 may be a structure that supports the inner shell 180, the outer tank 160, and the inner tank 102. Thus, the weights of the inner tank 102, the outer tank 160, and the inner shell 180 may be transferred to the middle tray 200.

The outer tank 160 may be placed around the outer periphery of the inner tank 102.

The inner tank 102 may be placed inside the outer tank 160. When the inner tank 102 is placed inside the outer tank 160, an outer circumferential surface of the inner tank 102 may be positioned in such a way as to make contact with an inner circumferential surface of the outer tank 160.

The humidifier may include a water softener 140 placed within the inner tank 102.

The water softener 140 may be placed inside the inner tank 102. The water softener 140 may be fixed in place as it is connected to the connector 120 placed inside the inner tank 102.

The inner shell 180 may be spaced apart from the outer tank 160. The inner shell 180 may be spaced apart from the water tank 100. A first discharge passage 32 along which humidified air moves may be formed between the inner shell 180 and the outer tank 160.

A second discharge passage 34 may be formed between the outer shell 22 and the inner shell 180.

The inner shell 180 and the outer shell 22 may be spaced apart from each other and form the second discharge passage 34. Filtered clean air blown by the blower 60 may move along the second discharge passage 34.

The discharge grille 12 may be positioned over the first discharge passage 32 and the second discharge passage 34 which will be described below.

The discharge grille 12 may be vertically elevated on one end to a certain height. Thus, a mixture passage 13 may be formed between the plurality of ribs 12b of the discharge grille 12. In the mixture passage 13, the air moving through the first discharge passage 32 and the air moving through the second discharge passage 34 may be mixed together.

The plurality of ribs 12b may be formed in such a way that outer peripheral ends thereof are positioned higher than inner peripheral ends thereof. Thus, the air moving through the first discharge passage 32 and the second discharge passage 34 may be guided radially inwardly.

A display 30 may be positioned on one side of the casing 10. The display 30 may allow the user to control the power or operation of the humidifier. The display 30 may be a display that shows the operating status or the like of the humidifier to the user.

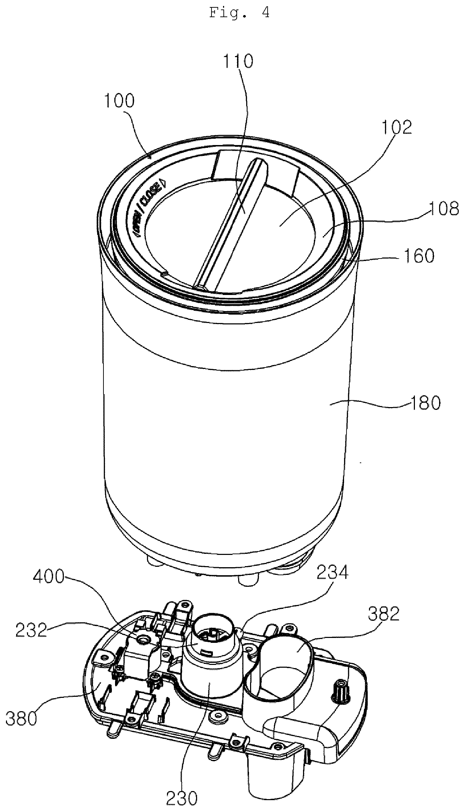

Referring to FIG. 4, the water tank, the supply pipe and the upper cover, which are positioned under the water tank, will be described.

The water tank 100 may include an inner tank 102 and an outer tank 160 positioned on the outer periphery of the inner tank 102. The inner shell 180 may be positioned on the outer periphery of the water tank 100.

The inner shell 102 may be positioned inside the outer tank 160. The inner tank 102 may be positioned on the inside of the outer tank 160. When the inner tank 102 is positioned on the inside of the outer tank 160, the outer circumferential surface of the inner tank 102 may be positioned in such a way as to make contact with the inner circumferential surface of the outer tank 160.

The water tank 100 may include a handle 108 positioned at an upper part of the inner tank 102. The handle 108 may include a handle bar 110 positioned across the open top side of the inner tank 102.

The humidified air may include a supply pipe 230 which supplies the water held in the water tank 100 to the first humidification reservoir 300. The supply pipe 230 may be positioned between the water tank 100 and the first humidification reservoir 300. The supply pipe 230 may temporarily store the water released from the water tank 100 and supplied to the first humidification reservoir 300.

The supply pipe 230 may have a supply chamber that temporarily stores water. A detection sensor 234 may be positioned on one side of the supply pipe 230 to detect the hardness of the water stored therein.

The supply pipe 230 may include an inlet port 232 connected to the connector 120. The inlet port 232 may protrude upward from the top of the supply pipe 230. The inlet port 232 may be connected to the connector 120 positioned within the inner tank 102 which will be described later.

The humidifier may include an upper cover 380 positioned on an upper side of the first humidification reservoir 300 or the second humidification reservoir 350.

A first valve 400 may be positioned on one side of the upper cover 380 to send the water in the supply pipe 230 to the first humidification reservoir 300. An exhaust tube 382 along which humidified air generated in the second humidification reservoir 350 moves may be positioned on the upper cover 380.

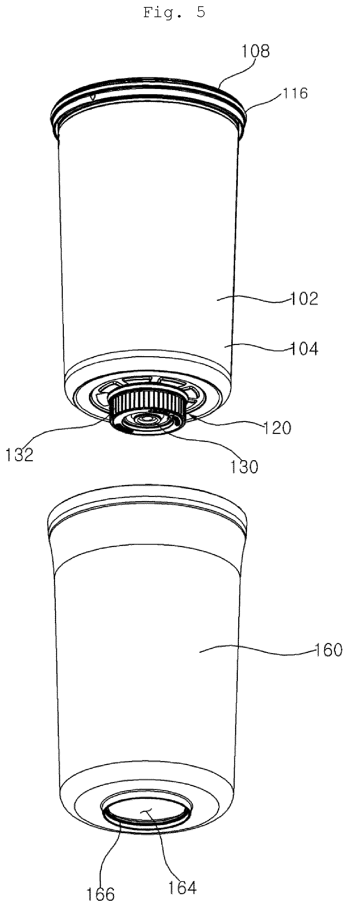

Referring to FIG. 5, the inner tank, the outer tank, and the connector will be described.

The water tank 100 may include an inner tank 102 and an outer tank 160 positioned outside the inner tank. The inner tank 102 may form a space inside where water is held. The outer tank 160 may form a space inside where the inner tank 102 is accommodated.

A water tank sealer 116 may be positioned on an upper end portion of the inner tank 102. The water tank sealer 116 may be positioned on an outer circumferential surface of the inner tank 102 and preferably positioned in such a way as to make contact with an inner circumferential surface of the outer tank 160.

The outer tank 160 may have a through-hole 164 formed through a bottom surface, for the connector 120 to penetrate.

The outer tank 160 may include a lower rim 166 protruding downward from the bottom surface. The lower rim 166 may have a structure that protrudes downward from the periphery of the through-hole 164. The lower rim 166 may have a ring-shaped structure.

The inner tank 102 may include an inner tank body 104 forming a space where water is held and a handle 108 positioned on the top side of the inner tank body 104.

The humidifier may include a connector 120 positioned in such a way as to be fixed to the inner tank 102 and connecting the inner tank 102 and the supply pipe 230. Part of the construction of the connector 120 may be positioned inside the inner tank 102. The rest of the construction of the connector 120 may be positioned outside the inner tank 102.

The connector 120 may send the water held in the inner tank 102 to the humidification module. The connector 120 may send the water held in the inner tank 102 to the humidification module through the supply pipe 230.

A connector holder 132 of the connector 120 and part of the connector valve 130 may be positioned outside the inner tank 102. The connector holder 132 and the connector valve 130 each may be connected to the inlet port 232 of the supply pipe 230.

The connector holder 132 and part of the connector valve 130 may protrude downward from the outer tank 160 via the through-hole 164 of the outer tank 160.

When the inner tank 102 is accommodated in the outer tank 160, the connector holder 132 and part of the connector valve 130 may be positioned under the outer tank 160.

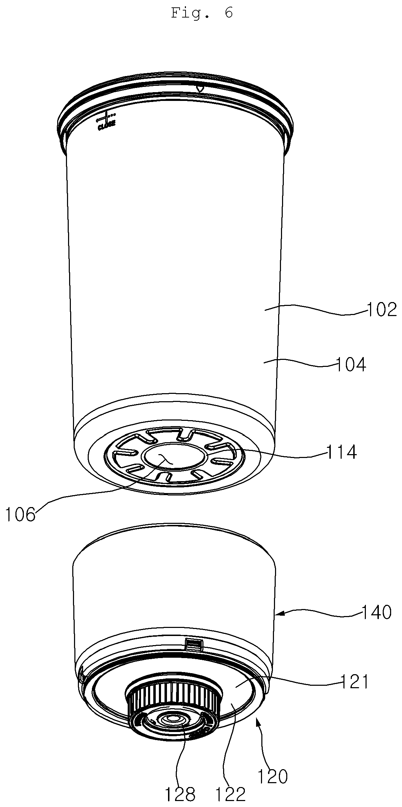

Referring to FIG. 6, the inner tank, the water softener, and the connector will be described.

A bottom hole 106 which part of the construction of the connector 120 penetrates may be formed through a bottom surface of the inner tank 102.

The bottom surface of the inner tank 102 may be foamed to increase strength.

A packing 114 may be positioned around the bottom hole 106 of the inner tank 102. The packing 114 may create a tight seal between the connector 120 and the inner tank 102.

The humidifier may include a water softener 140 positioned within the inner tank 102 and preferably a connector 120 positioned under the water softener 140 and tightly attached to the inner tank 102.

The water softener 140 may be positioned within the inner tank 102. Thus, it may be held in an inside space of the inner tank 102 to remove ions from the water moving to the humidification module.

The water softener 140 may have a hole formed through each of the top and bottom surfaces to allow water to move through.

The connector 120 may be positioned under the water softener 140. The connector 120 may have a structure that is coupled to the water softener 140.

The connector 120 may include a connector body 121 positioned to penetrate the bottom hole 106 of the inner tank body 104, a connector holder 132 coupled to the connector body 121, for fixing the connector body 121 in place, and a connector valve 130 positioned inside the connector body 121, for opening and closing an internal passage of the connector body 121.

The connector body 121 may include a connector plate 122 positioned under the water softener 140 and preferably a connector pipe 128 extending downward from the connector plate 122.

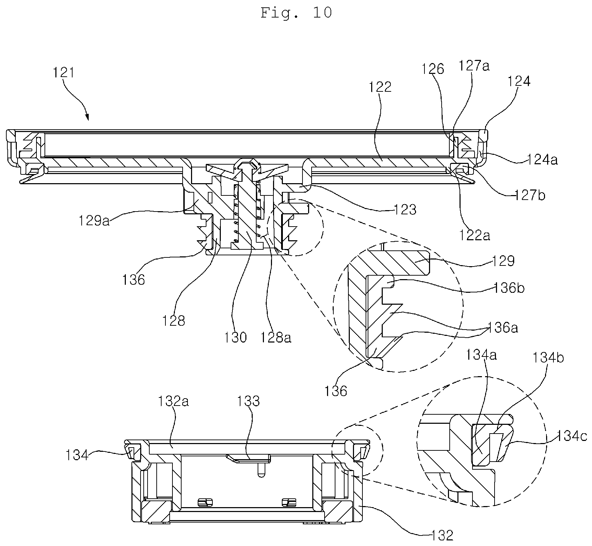

The connector plate 122 may be positioned inside the inner tank body 104. The connector pipe 128 may be positioned to penetrate the bottom hole 106 of the inner tank body 104 and preferably forms an internal passage 128a (see FIG. 10) inside it.

The connector plate 122 may be positioned over the bottom surface of the inner tank body 104. The connector plate 122 may have a structure in which it contacts the bottom of the water softener 140 and fixes the water softener 140 in place.

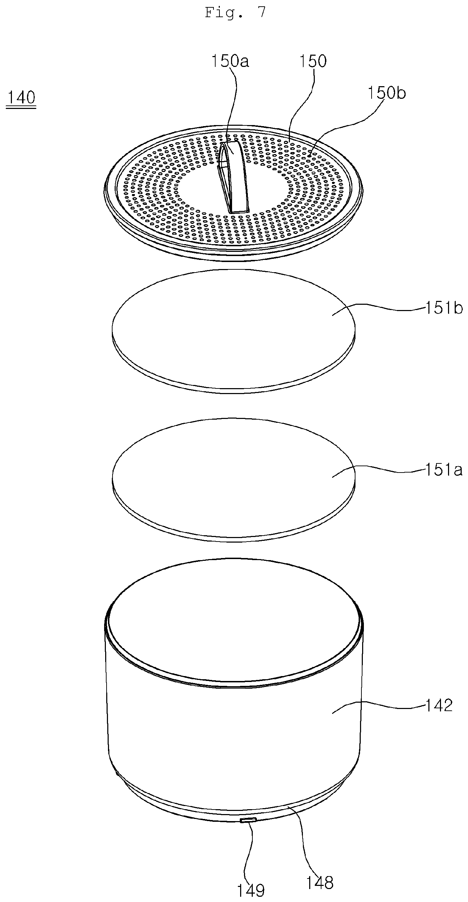

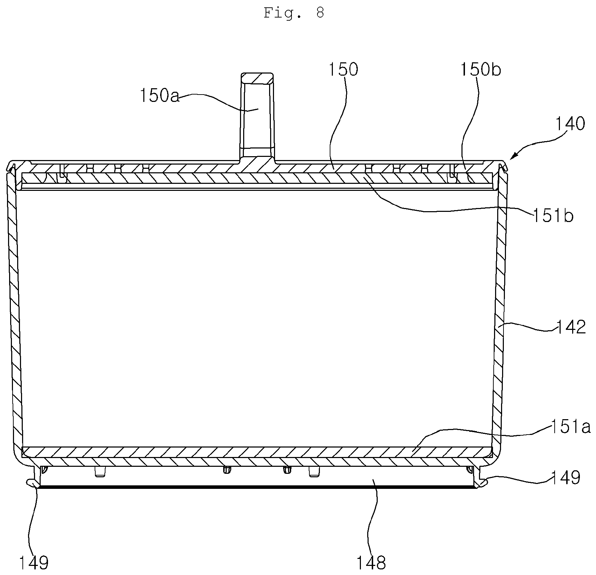

Referring to FIGS. 7 and 8, the water softener will be described.

The water softener 140 may be positioned in such a way as to be fixed to the inside of the inner tank 102. The water softener 140 may contain ion-exchange resins (not shown) inside, for removing ions from the water admitted to the inner tank 102.

The water softener 140 may have a plurality of holes formed through each of the top and bottom surfaces, for water to move through. The water softener 140 may allow the water admitted through the hole 150b formed through the top side to make contact and react with the ion-exchange resins, and may send the water admitted into the water softener 140 via a hole (not shown) formed through the bottom surface.

The water softener 140 may include a water softener casing which internally forms a space and preferably has a plurality of holes formed through the upper surface and the bottom surface.

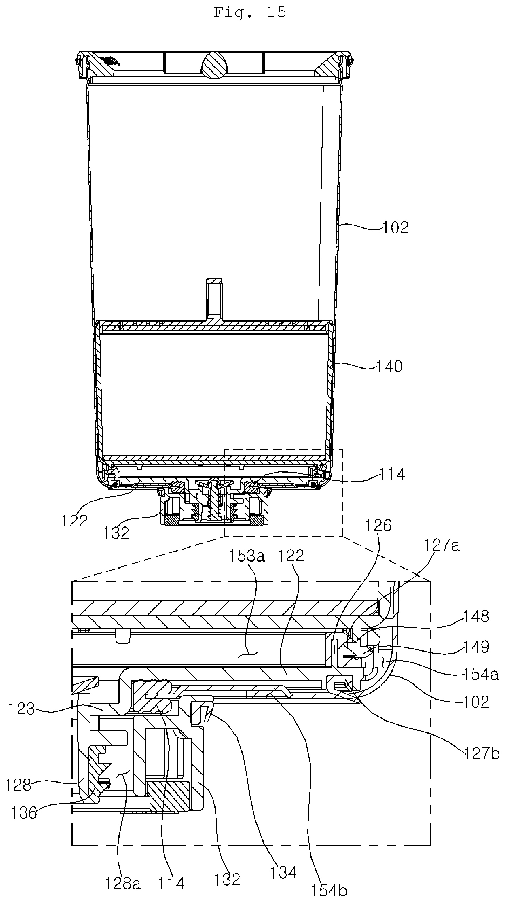

The plurality of holes formed through the bottom surface of the water softener casing may be formed within an area where an upper sealer 127a (see FIG. 15) to be described later is placed. The plurality of holes formed through the bottom surface of the water softener 140 may be positioned inside an area of contact with the upper sealer 127a.

The water softener casing may include a water softener housing 142 and a housing cover 150 which will be described later.

Ion-exchange resins may be placed within the water softener casing. The ion-exchange resins may remove ions present in water. The ion-exchange resins may reduce water hardness by removing ions present in water.

The water softener 140 may include a water softener housing 142 forming a space inside where ion-exchange resins (not shown) are placed, and preferably a housing cover 150 positioned over the water softener housing 142.

The water softener housing 142 may form a space inside where ion-exchange resins are placed. The water softener housing 142 may be open on the top side.

The water softener housing 142 may include a lower protrusion 148 protruding downward from the bottom surface.

The lower protrusion 148 may protrude downward from the bottom surface of the water softener housing 142. The lower protrusion 148 may cause the water softener 140 positioned over the connector 120 to be spaced a certain distance apart from the connector 120.

A hook 149 may be positioned on an outer circumferential surface of the lower protrusion 148, for connecting the water softener 140 to the connector 120. A plurality of hooks 149 may be positioned on the outer circumferential surface of the lower protrusion 148, spaced apart circumferentially.

A housing handle 150a may be positioned on top of the housing cover 150, protruding upward.

The water softener 140 may include at least one inner filter 151a and 151b positioned within the water softener housing 142. The water softener 140 may include inner filters 151a and 151b positioned within the water softener casing, for absorbing and dispersing the water admitted into the water softener casing.

The inner filter 151b may be positioned under the top surface of the water softener casing. The inner filter 151a may be positioned over the bottom surface of the water softener casing.

The inner filters 151a and 151b may be formed of a material of a certain thickness that absorbs water. A mesh filter may be positioned on each of the top and bottom surfaces of the water softener casing.

The mesh filter may prevent the ion-exchange resins from leaking out of the water softener 140.

The thickness of the inner filters 151a and 151b may be larger than the thickness of the mesh filter.

The inner filter may include an upper inner filter 151b positioned in an upper part of the water softener casing and preferably a lower inner filter 151a positioned in a lower part of the water softener casing.

The water softener 140 may include a plurality of inner filters 151a and 151b positioned within the water softener 140. The water softener 140 may include a lower inner filter 151a positioned over the bottom surface of the water softener housing 142 and an upper inner filter 151b positioned under the housing cover 150.

The lower inner filter 151a and the upper inner filter 151b may be positioned within the water softener 140, spaced apart vertically.

Ion-exchange resins may be placed between the lower inner filter 151a and the upper inner filter 151b. The lower inner filter 151a and the upper inner filter 151b may be sediment filters that keep the ion-exchange resins from being released out of the water softener 140.

Although not shown, a lower mesh filter may be positioned between the lower inner filter 151a and the bottom surface of the water softener housing 142. Also, an upper mesh filter may be positioned between the housing cover 150 and the upper inner filter 151b.

The lower mesh filter may have a structure that is inserted into the bottom surface of the water softener housing 142 and injection-molded. The upper mesh filter may have a structure that is inserted into the housing cover 150 and injection-molded.

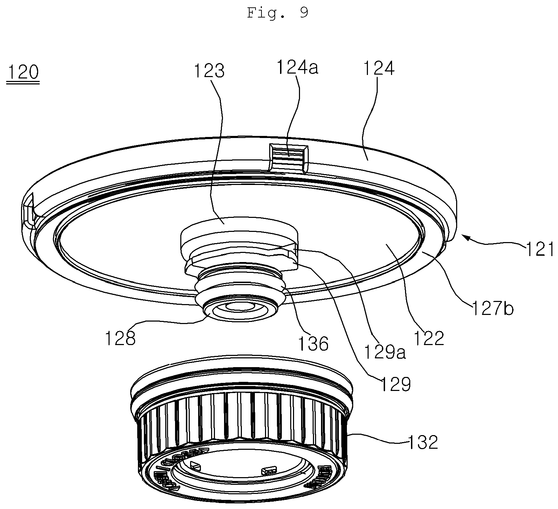

Referring to FIGS. 9 and 10, the connector will be described.

The connector 120 may be positioned within the inner tank 102. The connector 120 may be connected to the supply pipe 230.

The connector 120 may be coupled to the water softener 140 positioned within the inner tank 102. The connector 120 may be connected to the water tank 100 and release the water held in the water tank 100 to the humidification module.

The connector 120 may include a connector body 121 and a connector holder 132.

The connector holder 132 may be coupled to the bottom of the connector body 121. Part of the construction of the connector body 121 may be positioned within the inner tank 102. The connector holder 132 may be positioned under the inner tank 102.

The rest of the construction of the connector body 121 positioned outside the inner tank 102 may be coupled to the connector holder 132. When the connector holder 132 is coupled to the connector body 121, the packing 114 positioned on the inner tank 102 and the connector body 121 may be tightly attached.

The connector body 121 may include a connector plate 122 and a connector pipe 128 extending downward from the connector plate 122. The connector pipe 128 may have a structure that protrudes downward from the connector plate 122. The connector valve 130 may be positioned on the internal passage 128a formed inside the connector pipe 128.

The connector body 121 may include a lower protrusion 123 protruding downward from the connector plate 122. The lower protrusion 123 may have a structure that protrudes downward from the connector plate 122. The lower protrusion 123 may have a larger diameter than the connector pipe 128. The lower protrusion 123 may be positioned over the connector pipe 128.

An outer circumferential surface of the lower protrusion 123 may make contact with the packing 114 positioned on the inner tank 102.

A pipe projection 129 may be positioned on the outer periphery of the connector pipe 128. The pipe projection 129 may be positioned under a holder projection 133 of the connector holder 132, whereby the connector body 121 and the connector holder 132 may be fixed.

The pipe projection 129 may be spaced a certain distance apart downward from the lower protrusion 123.

A projection stopper 129a connecting one end portion of the pipe projection 129 and the lower protrusion 123 may be positioned on the outer periphery of the connector pipe 128. The projection stopper 129a may be formed vertically. The projection stopper 129a may restrict the movement of the holder projection 133.

An inner sealer 136 may be positioned around the outer periphery of the connector pipe 128. When the connector 120 is placed above the supply pipe 230 to be described later, the inner sealer 136 may seal the gap between the connector 120 and the supply pipe 230. The inner sealer 136 may be positioned under the pipe projection 129.

The inner sealer 136 may be formed of a rubber material that can change its configuration. The inner sealer 136 may be positioned in such a way as to make contact with the outer periphery of the connector pipe 128. An outwardly protruding part may be formed on a lower end of the connector pipe 128 so as to keep the inner sealer 136 from moving downward.

The inner sealer 136 may include a sealing projection 136a which protrudes outward. The inner sealer 136 may include a plurality of sealing projections 136a which protrude outward and are vertically spaced apart.

The sealing projection 136a may be formed to have a larger diameter toward the top. In a cross-sectional view, the sealing projection 136a may have the shape of a triangle whose top face has a large area.

The diameter of an outer peripheral edge of the sealing projection 136a may be larger than the diameter of an inner circumferential surface of an inlet port 232 of the supply pipe 230.

The inner sealer 136 may include an upper end projection 136b which is positioned above the sealing projection 136a and protrudes radially outward. The upper end projection 136b may make contact with an upper end portion of the inlet port 232 of the supply pipe 230.

An edge wall 124 may be positioned on the connector plate 122, protruding upward from an outer peripheral end of the connector plate 122. The edge wall 124 may have a hook hole 124a for the hook 149 of the water softener 140 to be inserted through.

A fixing rib 126 may be positioned on the connector plate 122, protruding upward and radially spaced apart from the edge wall 124. The fixing rib 126 may be positioned inside the edge wall 124. The upper sealer 127a may be positioned on the fixing rib 126. The lower protrusion 148 of the water softener 140 may be positioned between the fixing rib 126 and the edge wall 124.

The upper sealer 127a may be positioned on the fixing rib 126 and make contact with the lower protrusion 148 of the water softener 140. The upper sealer 127a may seal the gap between the fixing rib 126 and the lower protrusion 148.

The upper sealer 127a may include a plurality of sealing portions 127a1 which protrude outward and make contact with the lower protrusion and are vertically spaced apart.

A lower sealer 127b may be positioned on the bottom surface of the connector plate 122. The lower sealer 127b may be positioned in such a way as to make contact with the bottom surface of the inner tank 102. A sealer recess 122a may be formed on the bottom surface of the connector plate 122, recessed upwardly such that the lower sealer 127b is placed therein.

The connector holder 132 may be positioned in such a way as to be fixed to the outer periphery of the connector pipe 128. The connector holder 132 may be positioned under the bottom surface of the inner tank body 104. The bottom surface of the inner tank 102 may be positioned between the connector holder 132 and the connector plate 122.

The packing 114 may be positioned between the connector holder 132 and the connector plate 122. When the connector holder 132 is coupled to the connector pipe 128, the connector plate 122 may be tightly attached to the packing 114.

The holder projection 133 may be positioned in such a way as to protrude from an inner circumferential surface of the connector holder 132. The connector pipe 128 of the connector body 121 may be inserted into a space formed by the inner circumferential surface of the connector holder 132.

An outer sealer 134 may be positioned on an outer circumferential surface of the connector holder 132. The outer sealer 134 may be positioned in such a way as to protrude radially outward than the periphery of the connector holder 132.

The outer sealer 134 may be positioned on the outer circumferential surface of the connector holder 132. The outer sealer 134 may include a contact portion 134a making contact with the connector holder 132, preferably a protrusion 134b protruding radially outward from an upper end of the contact portion 134a, and preferably a sealing portion 134c extending downward from an outer peripheral end of the protruding portion 134b. The sealing portion 134c may be positioned in such a way as to be bent downward from the outer peripheral end of the protrusion 134b. The sealing portion 134c may make contact with the outer tank 160. When the inner tank 102 is positioned within the outer tank 160, the sealing portion 134c may make contact with one side of the outer tank 160.

The outer sealer 134 may be positioned in such a way as to make contact with the outer tank 160 positioned outside the connector holder 132. The outer sealer 134 may be positioned in such a way as to make contact with the inner shell 180 positioned outside the connector holder 132.

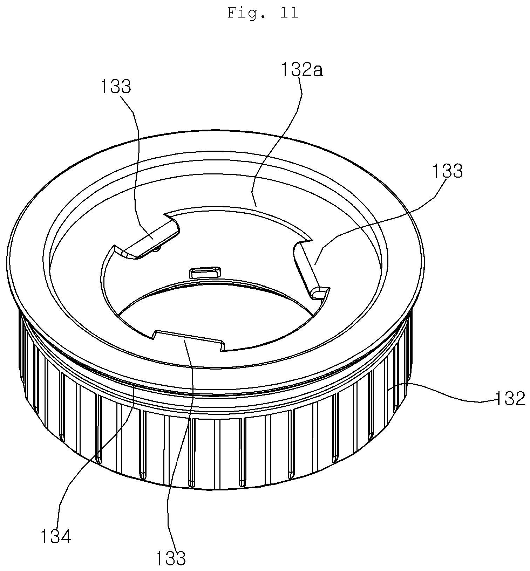

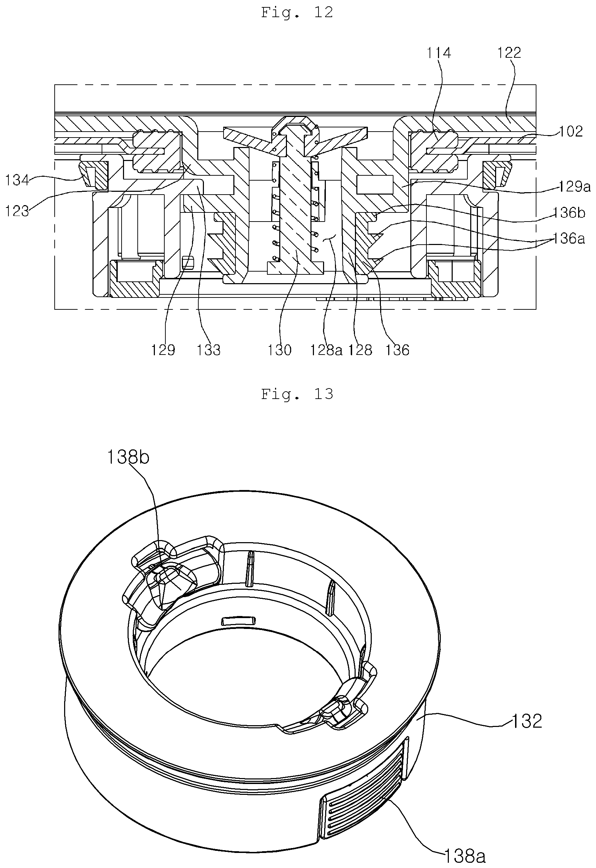

Referring to FIGS. 11 and 12, the construction of the connector holder according to a first embodiment and the connection between the connector holder and the connector body will be described.

A central portion of the connector holder 132 may be vertically perforated.

The connector holder 132 may include a seating portion 132a which is recessed downwardly from the upper surface. The inner tank 102 may be positioned over the seating portion 132a. The packing 114 positioned on the inner tank 102 may be positioned over the seating portion 132a.

The packing 114 may be positioned in such a way as to make contact with the seating portion 132a. The packing 114 may be positioned in such a way as to make contact with the lower protrusion 123 of the connector body 121.

The connector holder 132 may include a holder projection 133 protruding inwardly from the inner circumferential surface. The connector holder 132 may include a plurality of holder projections 133 spaced circumferentially apart from the inner circumferential surface.

When the connector holder 132 is fitted onto the connector body 121, the holder projection 133 may be positioned over the pipe projection 129. The holder projection 133 may be positioned between the pipe projection 129 and the lower protrusion 123.

The holder projection 133 may remain positioned over the pipe projection 129 by the projection stopper 129a positioned on one side of the pipe projection 129.

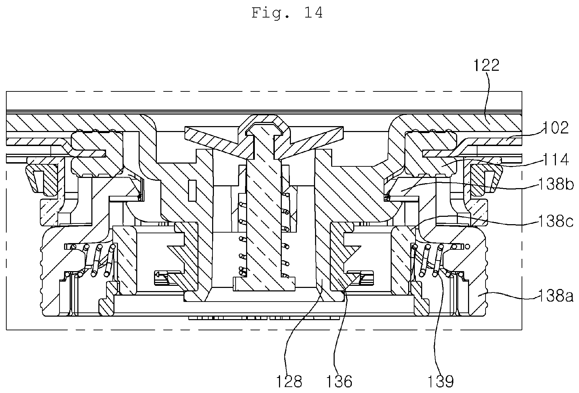

Referring to FIGS. 13 and 14, the construction of the connector holder according to a second embodiment and the connection between the connector holder and the connector body will be described.

The connector holder 132 may be hooked to the connector body 121.

A holder button 138a and a holder hook 138b may be positioned on the connector holder 132. When the holder button 138a is pressed, the position of the holder hook 138b may be changed.

The holder button 138a may be positioned on the outer circumferential surface of the connector holder 132. A pair of holder buttons 138a positioned on opposite sides may be positioned on the outer circumferential surface of the connector holder 132.

The holder hook 138b may be positioned in such a way as to protrude inwardly from the inner circumferential surface of the connector holder 132.

If the holder button 138a is not pressed, the holder hook 138b may be positioned in such a way as to protrude from the inner circumferential surface of the connector holder 132. When the holder button 138a is pressed, the holder hook 138b may be placed within the connector holder 132.

A spring 139 for restoring the position of the holder button 138a may be positioned within the connector holder 132. The holder button 138a and the holder hook 138b may be formed integrally.

A holder contact portion 138c which contacts the inside of the connector holder 132 may be positioned between the holder button 138a and the holder hook 138b.

The holder button 138a may be positioned lower than the holder contact portion 138c, and the holder hook 138b may be positioned higher than the holder contact portion 138c. The holder button 138a may be positioned outward than the holder contact portion 138c, and the holder hook 138b may be positioned inward than the holder contact portion 138c.

When the connector 132 is fitted onto the connector body 121, the holder hook 138b may be positioned over the pipe projection 129. Thus, the connector holder 132 may be held in place.

Referring to FIG. 15, the connecting structure of the inner tank, the water softener, and the connector will be described.

The water softener 140 may be positioned within the inner tank 102. Part of the construction of the connector 120 may be positioned within the inner tank 102. Another part of the construction of the connector 120 may be positioned to protrude out of the inner tank 102.

The packing 114 may be positioned on a lower end portion of the inner tank 102. The packing 114 may contact the connector 120. The packing 114 may prevent the water in the inner tank 102 from flowing through an outer portion of the connector 120.

The packing 114 may be positioned in such a way as to make contact with the bottom of the connector plate 122. The packing 114 may be positioned in such a way as to make contact with the outer circumferential surface of the lower protrusion 123.

The upper sealer 127a of the connector 120 may contact the bottom surface of the water softener 140. The upper sealer 127a of the connector 120 may be positioned in such a way as to make contact with the lower protrusion 148 of the water softener 140. Thus, it is possible to prevent the water moving down via a housing hole formed through the bottom surface of the water softener 140 from flowing to an outer side of the lower protrusion 148.

The upper sealer 127a of the connector 120 may be positioned in such a way as to make contact with the bottom surface of the water softener 140 or the lower protrusion 148.

The upper sealer 127a may allow the water that has passed through the water softener 140 to move to the supply pipe 230 through the connector pipe 128. The upper sealer 127a may allow the water that has passed through the water softener 140 to flow out of the inner tank 102.

The lower sealer 127b of the connector 120 may be positioned in such a way as to make contact with the bottom surface of the inner tank 102. The lower sealer 127b may keep the water that has not passed through the water softener 140 from flowing out of the inner tank 102.

A connecting space 153a may be formed between the water softener 140 and the connector 120. The connecting space 153a may connect the water softener 140 and the internal passage 128a of the connector pipe 128.

A peripheral space 154a and 154b may be formed between the connector 120 and the inner tank 102. An upper peripheral space 154a may be formed between the connector 120 and the periphery of the inner tank 102. A lower peripheral space 154b may be formed between the connector 120 and the bottom surface of the inner tank 102.

The upper sealer 127a may seal the gap between the connecting space 153a and the upper peripheral space 154a. The lower sealer 127b may seal the gap between the upper peripheral space 154a and the lower peripheral space 154b.

The packing 114 may seal the outsides of the lower peripheral space 154b and the inner tank 102.

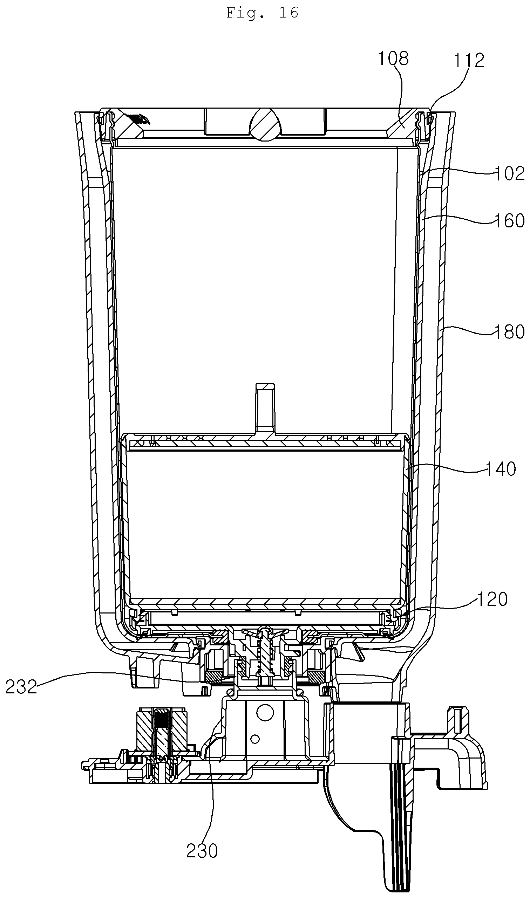

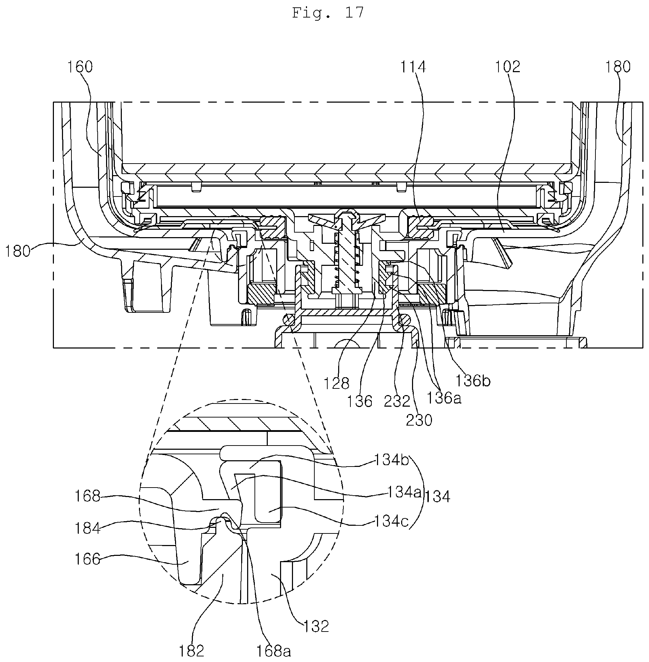

Referring to FIGS. 16 and 17, a structure for sealing when the outer tank, the inner shell, and the supply pipe may be additionally placed and the connections between the components will be described.

The inner tank 102 may be positioned within the outer tank 160. A handle sealer 112 positioned on the handle 108 of the inner tank 102 may be positioned in such a way as to make contact with an upper end portion of the outer tank 160.

The inner tank 102 may be positioned in such a way as to make contact with the outer tank 160. The outer tank 160 has a through-hole 164 formed through the bottom surface, for the connector 120 to penetrate. The outer tank 160 may include a lower rim 166 protruding downward from a lower surface thereof.

An inner protrusion 168 may be positioned on an inner circumferential surface of the lower rim 166, protruding inward. The inner protrusion 168 may be positioned in such a way as to make contact with the outer sealer 134 of the connector holder 132. The inner protrusion 168 may be positioned over the upper rim 182 of the inner shell 180.

The inner protrusion 168 may be positioned in such a way as to make contact with the inner shell 180. The inner protrusion 168 may be positioned in such a way as to make contact with the upper rim 182.

A bottom recess 168a may be formed on a bottom surface of the inner protrusion 168, recessed upwardly. A tip 184 may be formed on an upper end portion of the upper rim 182, protruding upward. The tip 184 of the upper rim 182 may be inserted into the bottom recess 168a of the inner protrusion 168.

The inner shell 180 may be placed around the periphery of the outer tank 160. The outer tank 160 and the inner shell 180 may be spaced apart from each other. The first discharge passage 32 may be formed between the outer tank 160 and the inner shell 180.

A shell through-hole 186 may be formed in a bottom surface of the inner shell 180 such that part of the connector 120 may be placed therein. The shell through-hole 186 may be formed under the through-hole 164 of the outer tank 160. The inner shell 180 may include an upper rim 182 protruding upward from where the shell through-hole 186 is formed.

The upper rim 182 may be positioned inside the lower rim 166. An upper end of the upper rim 182 may contact the inner protrusion 168 which protrudes from an inner circumferential surface of the lower rim 166.

The outer sealer 134 positioned on the outer circumferential surface of the connector holder 132 may be positioned in such a way as to make contact with the inner protrusion 168 of the outer tank 160. The outer sealer 134 may be positioned in such a way as to make contact with the upper rim 182 of the inner shell 180.

The outer sealer 134 may seal the gap between the first discharge passage 32 and the inner tank 102. The sealing portion 134c of the outer tank 160 may contact the inner protrusion 168 of the outer tank 160.

Part of the construction of the connector 120 may protrude outward from the outer tank 160.

A bottom part of the connector 120 may be connected to the inlet port 232 of the supply pipe 230. The inner sealer 136 positioned on the outer circumferential surface of the connector pipe 128 may contact the inner circumferential surface of the inlet port 232. The plurality of sealing projections 136a of the inner sealer 136 may make contact with the inner circumferential surface of the inlet port 232.

The inner sealer 136 and the inlet port 232 may overlap 0.3 to 0.7 mm around the entire perimeter. The diameter of an outer peripheral edge of the inner sealer 136 may be 0.3 to 0.7 mm larger than the diameter of an inner peripheral edge of the inlet port 232.

Throughout the document, preferred embodiments of the present invention have been described with reference to appended drawings; however, the present invention is not limited to the embodiments above. Rather, it should be noted that various modifications of the present invention may be made by those skilled in the art to which the present invention belongs without leaving the technical scope of the present invention defined by the appended claims, and these modifications should not be understood individually from the technical principles or perspectives of the present invention.

## Claims

1. A humidifier comprising:
a water tank (100) for storing water;
a humidification module (300, 350) configured to generate humidified air using water supplied from the water tank (100); and
a water softener (140) disposed inside the water tank (100),
wherein the water softener (140) includes:
a water softener casing (142, 150) forming a space and having a plurality of holes formed on a top surface and a bottom surface thereof;
ion-exchange resin disposed inside the water softener casing (142, 150); and
an inner filter (151a, 151b) disposed inside the water softener casing (142, 150) and configured to absorb and disperse water introduced into the water softener casing (142, 150).

2. The humidifier of claim 1, wherein the inner filter (151b) is disposed below the top surface of the water softener casing (142, 150).

3. The humidifier of claim 1 or 2, wherein the inner filter (151a, 151b) is formed of a material of a certain thickness that absorbs water.

4. The humidifier of any one of claims 1 to 3, wherein a mesh filter is disposed on each of the top surface and bottom surface of the water softener casing (142, 150).

5. The humidifier of claim 4, wherein the thickness of the inner filter (151a, 151b) is greater than the thickness of the mesh filter.

6. The humidifier of any one of claims 1 to 5, wherein the inner filter (151a, 151b) includes:
an upper inner filter (151b) disposed at an upper part of the water softener casing (142, 150); and
a lower inner filter (151a) disposed at a lower part of the water softener casing (142, 150).

7. The humidifier of claim 6, wherein the ion-exchange resin is disposed between the upper inner filter (151b) and the lower inner filter (151a).

8. The humidifier of any one of claims 1 to 7, wherein the water softener casing (142, 150) includes:
a water softener housing (142) forming a space for accommodating the ion-exchange resin and having a plurality of holes in a bottom surface thereof; and
a housing cover (150) for covering the upper part of the water softener housing (142) and having a plurality of holes,
wherein a mesh filter is mounted on the bottom surface of the water softener housing (142) and on the housing cover (150).

9. The humidifier of claim 8, when claim 8 is dependent on any one of claims 1 to 5 wherein the inner filter (151a, 151b) includes:
a lower inner filter (151a) disposed to contact the bottom surface of the water softener housing (142); and
an upper inner filter (151b) disposed below and in contact with the housing cover (150).

10. The humidifier of claim 8 or 9, wherein the mesh filter is insert-molded into the bottom surface of the water softener housing (142) and the housing cover (150).

11. The humidifier of any one of claims 1 to 10, further comprising a connector (120) coupled to the water softener (140) and configured to send water passed through the water softener (140) to the humidification module (300, 350),
wherein the connector (120) is disposed to penetrate the water tank (100).

12. The humidifier of claim 11, further comprising an upper sealer (127a) forming a seal between the connector (120) and the water softener (140).

13. The humidifier of claim 12, wherein the connector (120) comprises:
a connector plate (122) disposed below the water softener (140) and inside the water tank (100); and
a connector pipe (128) extending downward from the connector plate (122) and penetrating the water tank (100),
wherein the upper sealer (127a) is disposed on the connector plate (122).

14. The humidifier of claim 13, wherein a connecting space (153a) is formed between the water softener (140) and the connector (120), the space connecting the water softener (140) and an internal passage of the connector pipe (128),
wherein the upper sealer (127a) is configured to seal the connecting space (153a).

15. The humidifier of claim 13 or 14, further comprising a lower sealer (127b) forming a seal between the connector (120) and the water tank (100),
wherein the lower sealer (127b) is disposed below the connector plate (122).
